# EUROPÄISCHE PATENTANMELDUNG

(11) **EP 3 466 589 A1**
(43) Veröffentlichungstag der Anmeldung: **10.04.2019**
(21) Anmeldenummer: 17195387.0
(22) Anmeldetag: 09.10.2017
(51) Int. Cl.: B23K 9/20

(54) **BEFESTIGUNGSVERFAHREN**

(71) Anmelder: HILTI Aktiengesellschaft, 9494 Schaan (LI)
(72) Erfinder: Dr. Stahel, Simon, 7000 Chur (CH); Dr. Popp, Uwe, 9443 Widnau (CH)
(74) Vertreter: Hilti Aktiengesellschaft Corporate Intellectual Property

(57) **Zusammenfassung**

Verfahren zum Befestigen eines Bolzens an einem eine Oberflächenschicht aufweisenden Untergrund, bei dem in dem Untergrund eine Ausnehmung erzeugt wird, der Bolzen in der Ausnehmung mit dem Untergrund verbunden wird und die Ausnehmung um den Bolzen herum abgedeckt wird.

## Beschreibung

### Technisches Gebiet

Die Erfindung betrifft allgemein eine Vorrichtung und ein Verfahren zur Befestigung eines Bolzens an einem Untergrund sowie einen derartigen Bolzen.

### Stand der Technik

Es sind etliche Vorrichtungen und Verfahren bekannt, mit denen verschiedene Bolzen in unterschiedlichen Anwendungsfällen an einem Untergrund befestigt werden. Beispielsweise wird ein Bolzen mit dem Untergrund in Kontakt gebracht und mit elektrischem Strom beaufschlagt. Sobald der elektrische Strom zwischen dem Bolzen und dem Untergrund fliesst, wird der Bolzen unter Ausbildung eines Lichtbogens von dem Untergrund abgehoben. Aufgrund der freiwerdenden Energie verflüssigt sich teilweise das Material des Bolzens und des Untergrunds. Anschliessend wird der elektrische Strom abgeschaltet und der Bolzen in das verflüssigte Material eingetaucht, während dieses Material erkaltet und fest wird. Der Bolzen ist dann stoffschlüssig mit dem Untergrund verbunden.

Um die notwendige Energie für die Verflüssigung des Materials des Bolzens und des Untergrunds in ausreichend kurzer Zeit zur Verfügung zu stellen, sind Vorrichtungen bekannt, welche einen elektrischen Strom mit sehr hoher Stromstärke erzeugen und über ein entsprechend dimensioniertes elektrisches Kabel dem Bolzen zuführen. Um ein Oxidieren des verflüssigten Materials zu vermeiden, ist es bekannt, die Kontaktstelle zwischen dem Bolzen und dem Untergrund mit einem Inertgas zu spülen.

Bei Anwendungen beispielsweise im Gebäude- oder Schiffsbau werden Bolzen in verschiedenen Grössen mit einem Gewinde verwendet, an welches ein Gegenstand geschraubt wird, um den Gegenstand an dem Untergrund zu befestigen. Einige Parameter des Befestigungsverfahrens wie beispielsweise die Dauer und die elektrische Leistung des elektrischen Stroms sind von einem Anwender an der Vorrichtung einzustellen und an den verwendeten Bolzen anzupassen. Mittels einer Sichtprüfung beurteilt der Anwender schliesslich die Qualität der Verbindung zwischen dem Bolzen und dem Untergrund. Die Verbindungsqualität hängt damit auch von der Erfahrung und den Fähigkeiten des Anwenders ab.

In dem Fall, dass der Untergrund eine Oberflächenschicht, wie beispielsweise eine Lackierung, ein Korrosionsschutz oder eine Schmutzschicht, aufweist, wird diese Oberflächenschicht üblicherweise vor der Befestigung des Bolzens grossflächig abgeschliffen. Nach der Befestigung des Bolzens wird der abgeschliffene Bereich gereinigt und/oder mit einer neuen Lackierung oder Korrosionsschutzschicht versehen, was zeitaufwändig ist.

### Darstellung der Erfindung

Aufgabe der Erfindung ist es, eine Vorrichtung und/oder ein Verfahren zur Verfügung zu stellen, mit welchem eine Befestigung eines Bolzens an einem Untergrund vereinfacht und/oder verbessert wird.

Diese Aufgabe ist bei einem Verfahren zum Befestigen eines Bolzens an einem eine Oberflächenschicht aufweisenden Untergrund gelöst, bei dem ein Bolzen, welcher an einer Stirnseite einen Bolzendurchmesser aufweist, und ein ringförmiges Abdeckelement mit einem Innendurchmesser und einem Aussendurchmesser zur Verfügung gestellt werden, eine Ausnehmung in dem Untergrund erzeugt wird, indem die Oberflächenschicht in einem definierten Flächenbereich mit einem Flächendurchmesser entfernt wird, wobei der Flächendurchmesser grösser als der Bolzendurchmesser und kleiner als der Aussendurchmesser ist, die Stirnseite und/oder der Untergrund in der Ausnehmung verflüssigt und erstarren gelassen wird, die Stirnseite während des Erstarrens mit dem Untergrund in der Ausnehmung kontaktiert wird und die Ausnehmung um den Bolzen herum mittels des Abdeckelements abgedeckt wird. Bevorzugt wird die Oberflächenschicht in dem definierten Flächenbereich entfernt, indem sie abgetragen wird. Dadurch, dass der Untergrund dort, wo die Oberflächenschicht entfernt wurde, abgedeckt wird, ist ein Ausbessern der Oberflächenschicht unter Umständen nicht erforderlich oder zumindest vereinfacht.

Eine vorteilhafte Ausgestaltung ist dadurch gekennzeichnet, dass die Stirnseite und/oder das Abdeckelement und/oder der definierte Flächenbereich kreisförmig ist.

Eine weitere vorteilhafte Ausgestaltung ist dadurch gekennzeichnet, dass die Ausnehmung ein Sackloch ist.

Eine weitere vorteilhafte Ausgestaltung ist dadurch gekennzeichnet, dass die Ausnehmung mittels eines bevorzugt handgeführten Bohrwerkzeugs gebohrt wird.

Eine weitere vorteilhafte Ausgestaltung ist dadurch gekennzeichnet, dass die Ausnehmung eine Zentrierkontur aufweist und die Stirnseite eine Gegenkontur aufweist, wobei die Zentrierkontur und die Gegenkontur ineinander eingreifen, wenn der Bolzen an der gewünschten Position in der Ausnehmung angesetzt wird. Bevorzugt ist die Zentrierkontur konvex und die Gegenkontur konkav. Ebenfalls bevorzugt ist die Zentrierkontur konkav und die Gegenkontur konvex. Besonders bevorzugt umfasst die Gegenkontur die gesamte Stirnseite.

Eine weitere vorteilhafte Ausgestaltung ist dadurch gekennzeichnet, dass das Abdeckelement einen Dichtring mit einem Dichtring-Innendurchmesser und einem Dichtring-Aussendurchmesser umfasst, wobei der Dichtring-Innendurchmesser kleiner oder gleich dem Bolzendurchmesser ist und der Dichtring-Aussendurchmesser grösser als der Flächendurchmesser ist. Der Dichtring dichtet dann radial zum Bolzen und axial zum Untergrund ausserhalb des definierten Flächenbereichs, so dass die Fügestelle zwischen dem Bolzen und dem Untergrund vollständig gegenüber einer Umgebung abgedichtet ist.

Eine weitere vorteilhafte Ausgestaltung ist dadurch gekennzeichnet, dass das Abdeckelement an dem Bolzen befestigt wird, nachdem der Bolzen an dem Untergrund befestigt wird. Bevorzugt wird das Abdeckelement auf den Bolzen aufgeschraubt oder aufgesteckt. Eine alternative Ausgestaltung ist dadurch gekennzeichnet, dass das Abdeckelement an dem Bolzen vormontiert wird, bevor der Bolzen an dem Untergrund befestigt wird.

Eine weitere vorteilhafte Ausgestaltung ist dadurch gekennzeichnet, dass das Abdeckelement während des Verflüssigens und/oder Erstarrens des Materials des Bolzens beziehungsweise des Untergrunds ebenfalls teilweise oder vollständig verflüssigt wird und mit dem Bolzen und/oder dem Untergrund eine stoffschlüssige Verbindung eingeht.

Eine weitere vorteilhafte Ausgestaltung ist dadurch gekennzeichnet, dass das Abdeckelement verformt wird, nachdem der Bolzen an dem Untergrund befestigt wird.

Eine weitere vorteilhafte Ausgestaltung ist dadurch gekennzeichnet, dass das Abdeckelement in seiner Position an dem Bolzen verändert wird, nachdem der Bolzen an dem Untergrund befestigt wird.

### Ausführungsbeispiele

Die Erfindung wird nachstehend anhand von Ausführungsbeispielen unter Bezugnahme auf die Zeichnungen näher erläutert. Es zeigen:
- Fig. 1: schematisch eine Schweissvorrichtung,
- Fig. 2: eine Befestigungsanordnung in einer Querschnittsansicht,
- Fig. 3: eine weitere Befestigungsanordnung in einer Querschnittsansicht,
- Fig. 4: einen Schweissbolzen in einer Längsschnittsansicht,
- Fig. 5: einen weiteren Schweissbolzen in einer Längsschnittsansicht und
- Fig. 6: einen weiteren Schweissbolzen in einer Längsschnittsansicht.

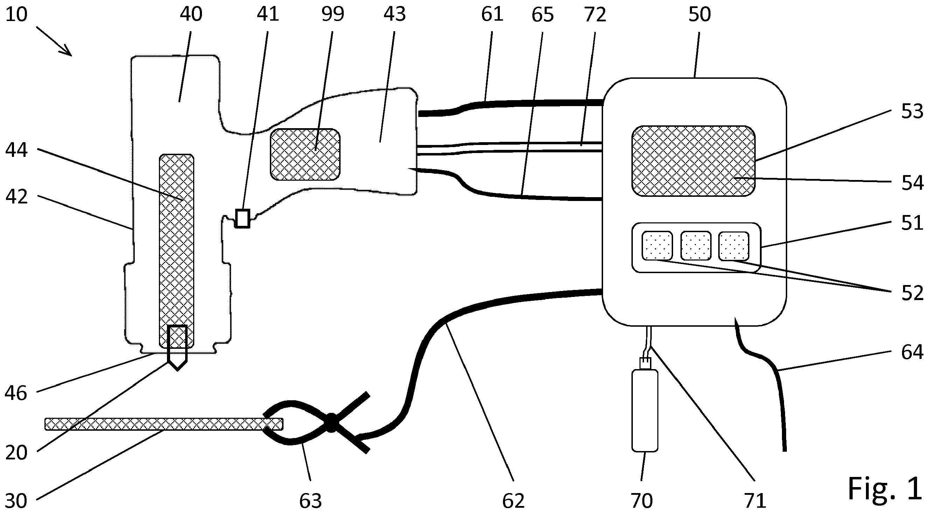

In Fig. 1 ist eine Schweissvorrichtung 10 zum Schweissen eines Schweissbolzens 20 an einen Untergrund 30 schematisch dargestellt. Ein Material des Schweissbolzens 20 und ein Material des Untergrunds 30 sind elektrisch leitfähig, insbesondere metallisch. Die Schweissvorrichtung 10 umfasst eine Schweisspistole 40 mit einem als Tastschalter ausgebildeten Auslöseschalter 41, ein Schweissgerät 50, ein erstes elektrisches Kabel 61, ein zweites elektrisches Kabel 62 mit einer Anschlussklemme 63, ein beispielsweise als Netzkabel ausgebildetes elektrisches Versorgungskabel 64, eine elektrische Kommunikationsleitung 65, ein als Gasflasche ausgebildetes Gasreservoir 70, eine schlauchförmige Gasversorgungsleitung 71 und einen Gasschlauch 72.

Das erste Kabel 61 dient einer Versorgung des Schweissbolzens 20 mit elektrischem Strom durch das Schweissgerät 50. Das zweite Kabel 62 dient einer elektrischen Verbindung des Untergrunds 30 mit dem Schweissgerät 50, wenn die Anschlussklemme 63 an den Untergrund 30 geklemmt ist. Bei Berührung des Schweissbolzens 20 mit dem Untergrund 30 schliesst sich ein Stromkreis, so dass der Schweissbolzen 20 von dem Schweissgerät 50 mit Schweissstrom beaufschlagbar ist, welcher beispielsweise als Gleichstrom oder Wechselstrom ausgebildet ist. Die Schweisspistole 40 umfasst zu diesem Zweck ein in Fig. 1 nicht gezeigtes Schweissstrom-Kontaktelement. Das Schweissgerät 50 umfasst eine nicht gezeigte Einrichtung zur Konvertierung von elektrischem Strom aus dem Versorgungskabel 64 in Schweissstrom, welche beispielsweise einen elektrischen Kondensator, einen Thyristor, einen Bipolar-Transistor mit isolierter Gate-Elektrode oder andere leistungselektronische Bauelemente sowie ein zugehöriges Steuergerät mit einem Mikroprozessor umfasst, um den Schweissstrom mit gewünschter Spannung und Stromstärke bereitzustellen.

Die Gasversorgungsleitung 71 und der Gasschlauch 72 dienen einer Versorgung eines Kontaktbereichs zwischen dem Schweissbolzen 20 und dem Untergrund 30 mit einem Schutzgas aus dem Gasreservoir 70, um den Kontaktbereich während eines Schweissvorgangs vor einer Oxidation durch Sauerstoff einer Umgebung zu schützen. Zur Steuerung eines Gasflusses zu dem Kontaktbereich umfasst das Gasreservoir 70, die Gasversorgungsleitung 71, das Schweissgerät 50, der Gasschlauch 72 oder die Schweisspistole 40 ein nicht gezeigtes, insbesondere regelbares Ventil auf.

Das Schweissgerät 50 weist eine Eingabeeinrichtung 51 mit Betätigungselementen 52 sowie eine Ausgabeeinrichtung 53 mit einem visuellen Anzeigeelement 54 und einer drahtlosen Übertragungseinheit auf. Die Eingabeeinrichtung 51 dient der Eingabe von Parametern eines mit der Schweissvorrichtung 10 durchzuführenden Schweissverfahrens, wie beispielsweise der elektrischen Spannung, Stromstärke, Leistung und zeitliche Dauer des Schweissstroms, Position und Geschwindigkeit des Bolzens und so weiter, durch einen Anwender der Schweissvorrichtung 10. Die Ausgabeeinrichtung 53 dient der Ausgabe von Informationen, wie beispielsweise Informationen über Parameter des Schweissverfahrens, Informationen über erfasste Emissionen des Schweissverfahrens oder andere Grössen, Informationen über eine Güte des Schweissvorgangs, Informationen über Massnahmen zur Verbesserung des Schweissvorgangs, Informationen über erfasste Eigenschaften des Schweissbolzens oder aus den vorgenannten Grössen abgeleitete Informationen, und/oder Empfehlungen oder Anweisungen zur Reinigung und/oder Wartung der Schweissvorrichtung 10, insbesondere der Schweisspistole 40, an den Anwender.

Die Kommunikationsleitung 65 dient einer Kommunikation zwischen der Schweisspistole 40, insbesondere einer in Fig. 1 nicht gezeigten Steuereinrichtung der Schweisspistole 40, und dem Schweissgerät 50, insbesondere dem Steuergerät und/oder der Eingabeeinrichtung 51 und/oder der Ausgabeeinrichtung 53. Durch diese Kommunikation wird beispielsweise ein Austausch von Informationen über die Parameter eines Schweissvorgangs bewerkstelligt, um beispielsweise eine Synchronisation des Schweissstroms mit einer Bewegung des Schweissbolzens 20 zu erreichen oder zu erleichtern. Bei nicht gezeigten Ausführungsbeispielen geschieht die Kommunikation zwischen der Schweisspistole und dem Schweissgerät drahtlos, per Funk oder mittels des ersten elektrischen Kabels, welches den Schweissstrom führt.

Die Schweisspistole 40 weist ein Gehäuse 42 mit einer Mündung 46 auf, von welchem ein Handgriff 43 mit dem Auslöseschalter 41 abragt. Die Schweisspistole 40 weist ferner einen Bolzenhalter 44 auf, an welchem der Schweissbolzen 20 während eines Schweissvorgangs gehalten ist. Hierzu umfasst der Bolzenhalter beispielsweise zwei, drei, vier oder mehr nicht im einzelnen gezeigte federnde Arme, zwischen die der Schweissbolzen 20 eingesteckt und mittels Klemmsitz gehalten wird. Die Schweisspistole 40 weist ferner ein Schweissstrom-Kontaktelement zur Beaufschlagung des Schweissbolzens 20 mit einem Schweissstrom auf, welches in den Bolzenhalter 44 integriert ist, beispielsweise in Form eines oder mehrerer der federnden Arme.

Die Schweisspistole 40 weist ferner eine Steuereinrichtung 99 zum Steuern der verschiedenen Komponenten und Einrichtungen der Schweisspistole und des Schweissgeräts 50 auf. Die Steuereinrichtung 99 ist zum Steuern eines oder mehrerer Parameter des Schweissvorgangs vorgesehen. Die Steuereinrichtung 99 umfasst dazu verschiedene elektronische Bauteile, wie beispielsweise einen oder mehrere Mikroprozessoren, einen oder mehrere temporäre oder dauerhafte Datenspeicher und dergleichen, auf.

Die Schweisspistole 40 weist ferner eine als ein erster Hubmagnet ausgebildete Bolzenabhubeinrichtung auf, welche den Bolzenhalter 44 mit einer Kraft von der Mündung 46 weg nach hinten (in Fig. 1 nach oben) beaufschlagt, wenn die Bolzenabhubeinrichtung aktiviert ist. Über eine nicht gezeigte Signalleitung kommuniziert die Steuereinrichtung 99 mit der Bolzenabhubeinrichtung, um die Bolzenabhubeinrichtung zu steuern, insbesondere zu aktivieren und zu deaktivieren.

Die Schweisspistole 40 weist ferner eine als Federelement oder als ein zweiter Hubmagnet ausgebildete Bolzeneintaucheinrichtung auf, welche den Bolzenhalter 44 mit einer Kraft zu der Mündung 46 hin nach vorne (in Fig. 1 nach unten) beaufschlagt, wenn die Bolzeneintaucheinrichtung aktiviert ist. Über eine nicht gezeigte Signalleitung kommuniziert die Steuereinrichtung 99 mit der Bolzeneintaucheinrichtung, um die Bolzeneintaucheinrichtung zu steuern, insbesondere zu aktivieren und zu deaktivieren. Wenn die Bolzeneintaucheinrichtung als ein Federelement ausgebildet ist, wird dieses Federelement vorzugsweise gespannt, wenn der Bolzenhalter von der Bolzenabhubeinrichtung nach hinten bewegt wird, so dass das Federelement den Bolzenhalter nach vorne bewegt, sobald die Bolzenabhubeinrichtung deaktiviert wird.

Bei einem Schweissverfahren mit der Schweissvorrichtung 10 werden zunächst der Untergrund 30 und der Bolzen 20 zur Verfügung gestellt. In einem weiteren Schritt werden von einem Anwender über die Eingabeeinrichtung Informationen eingegeben, beispielsweise über gewünschte Parameter des folgenden Schweissvorgangs. In einem weiteren Schritt wird der Schweissbolzen 20 von dem Schweissgerät 50 mittels des ersten Kabels 61 und des zweiten Kabels 62 mit einem Schweissstrom zwischen dem Schweissbolzen 20 und dem Untergrund 30 beaufschlagt. In einem weiteren Schritt wird der Schweissbolzen 20 mittels der Bolzenabhubeinrichtung von dem Untergrund unter Beibehaltung des zwischen dem Schweissbolzen 20 und dem Untergrund 30 fliessenden Schweissstroms abgehoben, wobei sich zwischen dem Schweissbolzen 20 und dem Untergrund 30 ein Lichtbogen ausbildet. Insbesondere aufgrund der von dem Lichtbogen erzeugten Hitze wird dann ein Material des Schweissbolzens 20 und/oder des Untergrunds 30 teilweise verflüssigt. In einem weiteren Schritt wird der Schweissbolzen 20 mittels der Bolzeneintaucheinrichtung in das verflüssigte Material des Schweissbolzens 20 beziehungsweise des Untergrunds 30 eingetaucht. Danach erstarrt das verflüssigte Material des Schweissbolzens 20 beziehungsweise des Untergrunds 30, so dass der Schweissbolzen 20 stoffschlüssig mit dem Untergrund 30 verbunden ist.

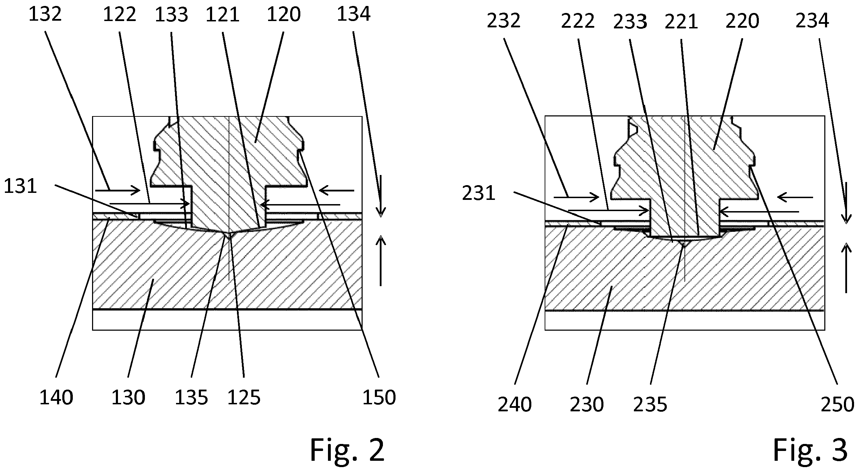

In Fig. 2 ist eine Befestigungsanordnung mit einem Schweissbolzen 120 und einem Untergrund 130 während eines Schweissvorgangs dargestellt. Der Untergrund 130 weist eine Oberflächenschicht 140 auf, welche beispielsweise eine Schutzschicht insbesondere gegen Korrosion, eine Oxidschicht, insbesondere Metalloxidschicht, oder eine Schmutzschicht umfasst. An einer Stirnseite 121 des Schweissbolzens 120 weist der Schweissbolzen einen Bolzendurchmesser 122 von beispielsweise 8 mm auf, wobei die Stirnseite 121 konvex ist und die Form einer flachen Kegelmantelfläche und/oder eine kreisförmige Querschnittsfläche aufweist. In einem definierten kreisförmigen Flächenbereich 131 mit einem Flächendurchmesser 132 weist der Untergrund 130 eine Ausnehmung 133 in Form eines Sacklochs mit einer Sacklochtiefe 134 auf. Der Flächendurchmesser 132 beträgt beispielsweise 20 mm und ist grösser als der Bolzendurchmesser 122.

Die Ausnehmung 133 hat in einem radial äusseren Randbereich eine konstante Tiefe, welche gleich einer Dicke der Oberflächenschicht 140 ist. In einem radial inneren Zentralbereich ist die Ausnehmung 133 konkav ausgebildet und weist eine ebenfalls konkave Zentrierkontur 135 auf. Die Spitze der kegelförmigen Stirnseite 121 des Schweissbolzens 120 bildet eine konvexe Gegenkontur 125, so dass die Zentrierkontur 135 und die Gegenkontur 125 ineinander eingreifen, wenn der Schweissbolzen 120 an der gewünschten Position in der Ausnehmung 133 angesetzt wird. Bei einem nicht gezeigten Ausführungsbeispiel ist die Zentrierkontur konvex und die Gegenkontur konkav. Die konkave Ausbildung der Ausnehmung 133 erleichtert ein Auffinden der gewünschten Schweissstelle durch ein Herantasten des Schweissbolzens an die Ausnehmung 133.

Zur Erzeugung der Ausnehmung 133 wurde die Oberflächenschicht 140 in dem definierten Flächenbereich 131 entfernt, indem sie durch Bohren mittels eines Bohrwerkzeugs abgetragen wurde. Bei dem Bohrwerkzeug handelt es sich vorzugsweise um einen Stufenbohrer, welcher eine umlaufende Stufe aufweist, deren axialer Abstand zu einer Bohrspitze des Stufenbohrers gleich der gewünschten Sacklochtiefe 134 ist.

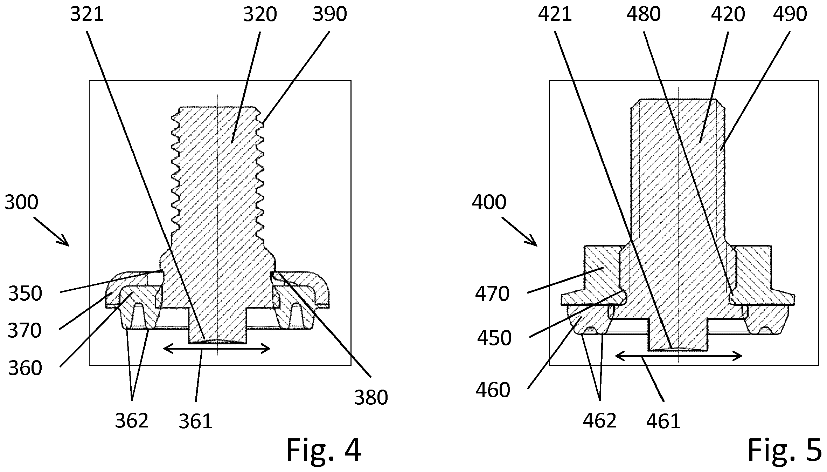

Der Schweissbolzen 120 weist ein als umlaufende Vertiefung ausgebildetes Stützmittel 150 auf, welches ein nicht gezeigtes Abdeckelement gegen den Untergrund 130 stützt, wenn das Abdeckelement nach der Befestigung des Schweissbolzens 120 an dem Untergrund 130 an dem Schweissbolzen 120 befestigt wird. Das Abdeckelement ist beispielsweise so ausgebildet wie eines der in Fig. 4 bis 6 dargestellten Abdeckelemente und weist einen Aussendurchmesser von beispielsweise 30 mm auf, welcher grösser ist als der Flächendurchmesser 132, damit die Fügestelle zwischen dem Schweissbolzen 120 und dem Untergrund 130 sowie die Ausnehmung 133 um den Schweissbolzen 120 herum vollständig von dem Abdeckelement abgedeckt sind. Das Abdeckelement wird auf den Schweissbolzen 120 aufgeschraubt.

In Fig. 3 ist eine Befestigungsanordnung mit einem Schweissbolzen 220 und einem Untergrund 230 in einem weiteren Ausführungsbeispiel während eines Schweissvorgangs dargestellt. Der Untergrund 230 weist eine Oberflächenschicht 240 auf, welche beispielsweise eine Schutzschicht insbesondere gegen Korrosion, eine Oxidschicht, insbesondere Metalloxidschicht, oder eine Schmutzschicht umfasst. An einer Stirnseite 221 des Schweissbolzens 220 weist der Schweissbolzen einen Bolzendurchmesser 222 von beispielsweise 6 mm auf, wobei die Stirnseite 221 eben ist und eine kreisförmige Querschnittsfläche aufweist. In einem definierten kreisförmigen Flächenbereich 231 mit einem Flächendurchmesser 232 weist der Untergrund 230 eine Ausnehmung 233 in Form eines Sacklochs mit einer Sacklochtiefe 234 auf. Der Flächendurchmesser 232 beträgt beispielsweise 18 mm und ist grösser als der Bolzendurchmesser 222.

Die Ausnehmung 233 hat in einem radial äusseren Randbereich eine konstante Tiefe, welche gleich einer Dicke der Oberflächenschicht 240 ist. In einem radial inneren Zentralbereich ist die Ausnehmung 233 konkav ausgebildet und weist eine ebenfalls konkave Zentrierkontur 235 auf, deren Durchmesser im Wesentlichen so gross ist wie der Bolzendurchmesser 222, so dass die Zentrierkontur 235 und die Stirnseite 221 ineinander eingreifen, wenn der Schweissbolzen 220 an der gewünschten Position in der Ausnehmung 233 angesetzt wird. Dies erleichtert ein Auffinden der gewünschten Schweissstelle durch ein Herantasten des Schweissbolzens an die Ausnehmung 233.

Der Schweissbolzen 220 weist ein als umlaufende Vertiefung ausgebildetes Stützmittel 250 auf, welches ein nicht gezeigtes Abdeckelement gegen den Untergrund 230 stützt, wenn das Abdeckelement nach der Befestigung des Schweissbolzens 220 an dem Untergrund 230 an dem Schweissbolzen 220 befestigt wird. Das Abdeckelement weist einen Aussendurchmesser von beispielsweise 25 mm auf, welcher grösser ist als der Flächendurchmesser 232, damit die Fügestelle zwischen dem Schweissbolzen 220 und dem Untergrund 230 sowie die Ausnehmung 233 um den Schweissbolzen 220 herum vollständig von dem Abdeckelement abgedeckt sind. Das Abdeckelement wird auf den Schweissbolzen 220 aufgesteckt.

In Fig. 4 ist ein Schweissbolzen 320 mit einem Abdeckelement 300 in einem Längsschnitt dargestellt. Der Schweissbolzen 320 weist eine konkave Stirnseite 321 in Form einer flachen Kegelmantelfläche und mit einer kreisförmigen Querschnittsfläche auf. Weiterhin weist der Schweissbolzen ein als Aussengewinde mit einem Gewindedurchmesser ausgebildetes Anbindemittel 390 zum Anbinden eines Anbauelements an den Schweissbolzen 320 auf. Weiterhin weist der Schweissbolzen 320 ein als umlaufende Vertiefung ausgebildetes Stützmittel 350 auf, welches das Abdeckelement 300 gegen einen nicht gezeigten Untergrund stützt, wenn der Schweissbolzen 320 an dem Untergrund befestigt ist.

Das Abdeckelement 300 umfasst einen kreisförmigen Dichtring 360 mit einem Dichtring-Innendurchmesser 361 und einem Dichtring-Aussendurchmesser sowie eine ebenfalls kreisringförmige Abdeckscheibe 370. Der Dichtring-Innendurchmesser 361 ist grösser als der Gewindedurchmesser des Anbindemittels 390, damit der Dichtring 360 über das Anbindemittel 390 hinweg bewegbar ist. Das Abdeckelement 300, insbesondere die Abdeckscheibe 370, weist ein Gegenstützmittel 380 auf, welches zur Stützung des Abdeckelements 300 gegen den Untergrund mit dem Stützmittel 350 des Schweissbolzens 320 in Eingriff steht. Das Gegenstützmittel 380 umfasst einen oder mehrere entlang eines Umfangs angeordnete, von der Abdeckscheibe 370 radial nach innen ragende Vorsprünge.

Das Abdeckelement 300 ist bereits vor einer Befestigung des Schweissbolzens 320 an dem Untergrund an dem Schweissbolzen 320 so vormontiert, dass der Dichtring 360 mit dem Dichtring-Innendurchmesser 361 an dem Schweissbolzen 320 anliegt. Bei einem nicht gezeigten Ausführungsbeispiel ist das Abdeckelement zwar vor der Befestigung an dem Schweissbolzen vormontiert, wird aber erst nach der Befestigung in seine endgültige Position gebracht, beispielsweise durch Verschieben in Befestigungsrichtung. Nach einer Befestigung des Schweissbolzens 320 an dem Untergrund dichtet der Dichtring 360 radial zum Schweissbolzen 320 und axial zum Untergrund, so dass die Fügestelle zwischen dem Schweissbolzen 320 und dem Untergrund vollständig gegenüber einer Umgebung abgedichtet ist.

Für eine verbesserte axiale Abdichtung zum Untergrund weist der Dichtring 360 zwei umlaufende axiale Vorsprünge 362 auf, welche verformt sind, wenn der Bolzen an dem Untergrund befestigt ist. Zusätzlich oder alternativ wird das Material des Dichtrings 360 während des Verflüssigens und/oder Erstarrens des Materials des Schweissbolzens 320 beziehungsweise des Untergrunds ebenfalls teilweise oder vollständig verflüssigt und geht bei Erstarren mit dem Schweissbolzen 320 und/oder der Abdeckscheibe 370 und/oder dem Untergrund eine stoffschlüssige Verbindung ein.

In Fig. 5 ist ein Schweissbolzen 420 mit einem Abdeckelement 400 in einem Längsschnitt dargestellt. Der Schweissbolzen 420 weist eine konkave Stirnseite 421 in Form einer flachen Kegelmantelfläche und mit einer kreisförmigen Querschnittsfläche auf. Weiterhin weist der Schweissbolzen ein als Aussengewinde mit einem Gewindedurchmesser ausgebildetes Anbindemittel 490 zum Anbinden eines Anbauelements an den Schweissbolzen 420 auf. Weiterhin weist der Schweissbolzen 420 ein als umlaufende Vertiefung ausgebildetes Stützmittel 450 auf, welches das Abdeckelement 400 gegen einen nicht gezeigten Untergrund stützt, wenn der Schweissbolzen 420 an dem Untergrund befestigt ist.

Das Abdeckelement 400 umfasst einen kreisförmigen Dichtring 460 mit einem Dichtring-Innendurchmesser 461 und einem Dichtring-Aussendurchmesser sowie eine Abdeckscheibe 470. Das Abdeckelement 400, insbesondere die Abdeckscheibe 470, weist ein als umlaufender, radial nach innen von dem Abdeckelement 400 abragender Vorsprung ausgebildetes Gegenstützmittel 480 auf, welches zur Stützung des Abdeckelements 400 gegen den Untergrund mit dem Stützmittel 450 des Schweissbolzens 420 in Eingriff steht.

Das Abdeckelement 400 ist bereits vor einer Befestigung des Schweissbolzens 420 an dem Untergrund an dem Schweissbolzen 420 so vormontiert, dass der Dichtring 460 mit dem Dichtring-Innendurchmesser461 an dem Schweissbolzen 420 anliegt. Nach einer Befestigung des Schweissbolzens 420 an dem Untergrund dichtet der Dichtring 460 radial zum Schweissbolzen 420 und axial zum Untergrund, so dass die Fügestelle zwischen dem Schweissbolzen 420 und dem Untergrund vollständig gegenüber einer Umgebung abgedichtet ist.

Für eine verbesserte axiale Abdichtung zum Untergrund weist der Dichtring 460 zwei umlaufende axiale Vorsprünge 462 auf, welche verformt sind, wenn der Bolzen an dem Untergrund befestigt ist. Zusätzlich oder alternativ wird das Material des Dichtrings 460 während des Verflüssigens und/oder Erstarrens des Materials des Schweissbolzens 420 beziehungsweise des Untergrunds ebenfalls teilweise oder vollständig verflüssigt und geht bei Erstarren mit dem Schweissbolzen 420 und/oder der Abdeckscheibe 470 und/oder dem Untergrund eine stoffschlüssige Verbindung ein.

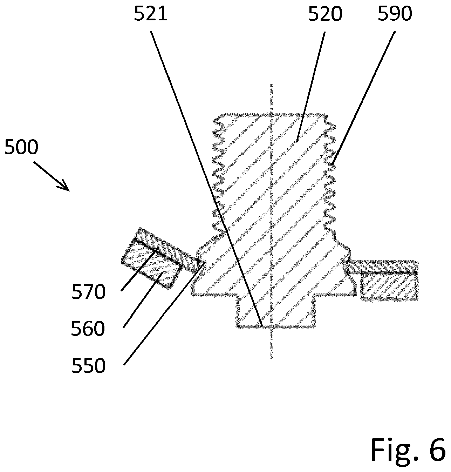

In Fig. 6 ist ein Schweissbolzen 520 mit einem Abdeckelement 500 in einem Längsschnitt dargestellt. Der Schweissbolzen 520 weist eine ebene Stirnseite 521 mit einer kreisförmigen Querschnittsfläche auf. Weiterhin weist der Schweissbolzen ein als Aussengewinde mit einem Gewindedurchmesser ausgebildetes Anbindemittel 590 zum Anbinden eines Anbauelements an den Schweissbolzen 520 auf. Weiterhin weist der Schweissbolzen 520 ein als umlaufende Vertiefung ausgebildetes Stützmittel 550 auf, welches das Abdeckelement 500 gegen einen nicht gezeigten Untergrund stützt, wenn der Schweissbolzen 520 an dem Untergrund befestigt ist. Das Abdeckelement 500 umfasst einen kreisförmigen Dichtring 560 sowie eine ebenfalls kreisringförmige Abdeckscheibe 570.

Das Abdeckelement 500 ist bereits vor einer Befestigung des Schweissbolzens 520 an dem Untergrund an dem Schweissbolzen 520 in der in Fig. 6 links dargestellten Position vormontiert. Nach der Befestigung wird das Abdeckelement 500 in seine in Fig. 7 rechts dargestellte endgültige Position gebracht, beispielsweise durch Umklappen in Befestigungsrichtung oder eine andere Verformung. Die Verformung wird beispielsweise von einem Anwender, insbesondere mit Hilfe eines Werkzeugs, oder bereits während des Befestigungsvorgangs insbesondere aufgrund thermischer Verformung oder mittels einer dafür vorgesehenen Vorrichtung an der Schweisspistole bewerkstelligt.

Der Dichtring ist bei einem oder mehreren der Ausführungsbeispiele aus einem Elastomer gefertigt, die Abdeckscheibe aus Metall oder Keramik.

Die Erfindung wurde anhand von Beispielen einer Vorrichtung zur Befestigung eines ersten Gegenstandes an einem zweiten Gegenstand sowie einem Herstellungsverfahren für eine solche Vorrichtung beschrieben. Die Merkmale der beschriebenen Ausführungsformen sind dabei auch beliebig miteinander innerhalb einer einzigen Befestigungsvorrichtung beziehungsweise eines einzigen Herstellungsverfahrens kombinierbar. Es wird darauf hingewiesen, dass die erfindungsgemässe Vorrichtung und das erfindungsgemässe Verfahren auch für andere Zwecke geeignet sind.

## Patentansprüche

1. Verfahren zum Befestigen eines Bolzens an einem eine Oberflächenschicht aufweisenden Untergrund, mit den Schritten
a) Zur-Verfügung-Stellen eines Bolzens, welcher an einer Stirnseite einen Bolzendurchmesser aufweist,
b) Zur-Verfügung-Stellen eines ringförmigen Abdeckelements mit einem Innendurchmesser und einem Aussendurchmesser,
c) Erzeugen einer Ausnehmung in dem Untergrund, indem die Oberflächenschicht in einem definierten Flächenbereich mit einem Flächendurchmesser entfernt, insbesondere abgetragen, wird, wobei der Flächendurchmesser grösser als der Bolzendurchmesser und kleiner als der Aussendurchmesser ist,
d) Verflüssigen der Stirnseite und/oder des Untergrunds in der Ausnehmung,
e) Erstarrenlassen der Stirnseite beziehungsweise des Untergrunds in der Ausnehmung,
f) Kontaktieren der Stirnseite mit dem Untergrund in der Ausnehmung während des Erstarrens und
g) Abdecken der Ausnehmung um den Bolzen herum mittels des Abdeckelements.

2. Verfahren nach Anspruch 1, bei dem die Stirnseite und/oder das Abdeckelement und/oder der definierte Flächenbereich kreisförmig ist.

3. Verfahren nach einem der vorhergehenden Ansprüche, bei dem die Ausnehmung ein Sackloch ist.

4. Verfahren nach einem der vorhergehenden Ansprüche, bei dem die Ausnehmung mittels eines Bohrwerkzeugs gebohrt wird.

5. Verfahren nach einem der vorhergehenden Ansprüche, bei dem die Ausnehmung eine Zentrierkontur aufweist und die Stirnseite eine Gegenkontur aufweist, wobei die Zentrierkontur und die Gegenkontur ineinander eingreifen, wenn der Bolzen an der gewünschten Position in der Ausnehmung angesetzt wird.

6. Verfahren nach Anspruch 5, bei dem die Zentrierkontur konvex ist und die Gegenkontur konkav ist.

7. Verfahren nach Anspruch 5, bei dem die Zentrierkontur konkav ist und die Gegenkontur konvex ist.

8. Verfahren nach Anspruch 6, bei dem die Gegenkontur die gesamte Stirnseite umfasst.

9. Verfahren nach einem der vorhergehenden Ansprüche, bei dem das Abdeckelement einen Dichtring mit einem Dichtring-Innendurchmesser und einem Dichtring-Aussendurchmesser umfasst, wobei der Dichtring-Innendurchmesser kleiner oder gleich dem Bolzendurchmesser ist und der Dichtring-Aussendurchmesser grösser als der Flächendurchmesser ist.

10. Verfahren nach einem der vorhergehenden Ansprüche, bei dem das Abdeckelement an dem Bolzen befestigt wird, nachdem die Schritte d), e) und f) durchgeführt sind.

11. Verfahren nach Anspruch 10, bei dem das Abdeckelement auf den Bolzen aufgeschraubt oder aufgesteckt wird.

12. Verfahren nach einem der Ansprüche 1 bis 9, bei dem das Abdeckelement an dem Bolzen vormontiert wird, bevor die Schritte d), e) und f) durchgeführt werden.

13. Verfahren nach Anspruch 12, bei dem das Abdeckelement während Schritt d), e) und/oder f) teilweise oder vollständig verflüssigt wird und mit dem Bolzen und/oder dem Untergrund eine stoffschlüssige Verbindung eingeht.

14. Verfahren nach Anspruch 12, bei dem das Abdeckelement verformt wird, nachdem die Schritte d), e) und f) durchgeführt sind.

15. Verfahren nach Anspruch 12, bei dem das Abdeckelement in seiner Position an dem Bolzen verändert wird, nachdem die Schritte d), e) und f) durchgeführt sind.
